# EUROPÄISCHE PATENTSCHRIFT

(11) **EP 0 394 518 B1**
(45) Veröffentlichungstag und Bekanntmachung des Hinweises auf die Patenterteilung: **21.07.1993**
(21) Anmeldenummer: 89107500.4
(22) Anmeldetag: 26.04.1989
(51) Int. Cl.: F16C 33/20

(54) **Wartungsfreies Gleitlager und ein Verfahren für seine Herstellung**
Maintenance-free sliding bearings and a method for it's production
Palier lisse ne nécessitant pas d'entretien et un procédé de réalisation d'un tel palier

(43) Veröffentlichungstag der Anmeldung: 31.10.1990
(73) Patentinhaber: Norton Pampus GmbH, 47877 Willich (DE)
(72) Erfinder: Harig, Friedrich, D-4156 Willich 3 (DE); Petit, Dominique, Dr., B-4512 Blegny (BE)
(74) Vertreter: Cohausz & Florack Patentanwälte

(56) Entgegenhaltungen:
- EP-A- 0 217 462
- DE-A- 2 401 804
- DE-A- 3 021 369
- DE-A- 3 534 242
- FR-A- 1 354 161
- Fertigungstechnik und Betrieb, 23. Jahrgang, Januar 1973, VEB Verlag Technik Berlin, Seite 48, 49
- Adhesives Age, Februar 1967, Seiten 30-34: "How to use fluorocarbon plastics as bonding agents"

## Beschreibung

Gegenstand der Erfindung ist ein wartungsfreies Gleitlager.

Wartungsfreie Gleitlager, die aus einem Metallträger und einer Kunststoffschicht bestehen, sind z.B. aus der DE-A-3 534 242 und der EP-A-0 217 462 bekannt. Solche Mehrschichtgleitlager bestehen aus einer Kombination eines mit einer Rauhgrundschicht versehenen Metallträgers aus Stahl, Bronze oder einer hochfesten Aluminiumlegierung und einer Gleitschicht aus einer Matrix aus Polytetrafluorethylen. Die Rauhgrundschicht besteht aus einer porös aufgesinterten Bronzeschicht, Eisenschicht oder Schicht einer Aluminiumlegierung. Diese Schicht bildet dann das Verankerungsmaterial für die in Form einer Paste aufzubringende Polytetrafluorethylenschicht bzw. eine Schicht, die aus dessen Copolymeren besteht. Die hochviskose Paste wird festgewalzt und gesintert.

Sofern in der Paste Bronzepartikel eingelagert sind, um die für das Lager wichtige Wärmeleitfähigkeit des Kunststoffes zu verbessern, besteht die Gefahr, daß bei der Herstellung die äußere Schicht oxydiert. Ein solches Lagermaterial ist auch nicht inert. Insbesondere besteht die Gefahr der Zerstörung durch Säuren. Ferner kann es beim Aufbringen der Paste zu einer Entmischung kommen.

Aus Fertigungstechnik und Betrieb 23 (1973), Heft 1, Seiten 48 bis 49, ist eine Folienbeschichtung mittels herkömmlichen Polytetrafluorethylens bekannt. Da dieses Material gegenüber allen Klebstoffen völlig inert ist, wird die Folie zunächst klebfähig gemacht. D.h. die Polytetrafluorethylenfolien können nicht in der Weise auf einen Träger aufgebracht werden, daß sie dort allein durch physikalische Adhäsionskräfte festgehalten werden. Es ist vielmehr erforderlich, die Folien mittels eines Klebers zu befestigen. In diesem Falle hängt demnach die Temperaturbelastbarkeit nicht mehr nur von der Art der Folie, sondern auch von dem verwendeten Kleber ab.

Die DE-A-2 401 804 betrifft ein Verbundlagerelement, dessen Laufschicht im wesentlichen aus einem ungefüllten Kunststoff besteht. Hierfür werden Polyarylensulfide, Epoxidharze, Polyamidharze, Polyesterharze, Phenoxyharze, Polyimidharze, Polyamid-imid-Harze, Polypropylenharze und Polysulfonharze verwendet. Auch diese Kunststoff-Folien werden entweder direkt, oder mit Hilfe von geeigneten Klebstoffen an der Metallfläche befestigt. Außerdem wird empfohlen, auf die Kunststoffe einen dünnen Film an Schmieröl aufzubringen.

In der FR-A-1 354 161 wird eine aus Tetrafluorethylen bestehende mit Molybdändisulfid gefüllte Beschichtung dargestellt. In Adhesives Age, Februar 1967, Seiten 30 bis 34,
werden ebenfalls Polytetrafluorethylen beschichtete Metalle erwähnt. Jedoch wird das Polytetrafluorethylen chemisch behandelt, so daß durch Epoxidgruppen eine Verbindung mit dem Metallträger hergestellt wird. Ein direktes Auftragen wird nur für FEP für möglich gehalten. Es wird ausdrücklich betont, daß dieses Material thermoplastisch ist und im Gegensatz zu Tetrafluorethylen ohne zusätzliche Verbindungsschicht direkt auf Metall aufgetragen werden kann.

Schließlich sei darauf hingewiesen, daß aus der DE-A-3 021 369 aus modifizierten Tetrafluorethylenpolymerisaten bestehende körnige, rieselfähige Pulver bekannt sind. Es handelt sich hier insbesondere um ein Copolymerisat aus Perfluoralkylvinylether der Formel: CF₂ = CF - OR_{f}, worin R_{f} einen Perfluorethyl-, Perfluor-n-propyl- oder Perfluor-n-butyl-Rest bedeutet, und Tetrafluorethylen. Diese Pulver werden für die Ram-Extrusion eingesetzt, da sie sich aufgrund ihres Schüttgewichts und ihrer Rieselfähigkeit besonders gut für die automatische Dosierung eignen. Eine Eignung dieses Materials für die Beschichtung von Metallen oder anderen Materialien wird nicht erwähnt.

Aufgabe der Erfindung ist es, ein wartungsfreies Gleitlager zu schaffen, das die genannten Nachteile nicht hat.

Die Lösung besteht darin, daß das Gleitlager aus einem Metallträger und einer unmittelbar darauf aufgebrachten, aus einem Copolymerisat aus Perfluoralkylvinylether der Formel: CF₂ = CF - O - R_{f}, worin R_{f} einen Perfluorethyl-, Perfluor-n-propyl- oder Perfluor-n-butyl-Rest bedeutet, und Tetrafluorethylen bestehenden Schicht, die entweder die Gleitschicht oder eine Zwischenschicht, auf welcher eine Gleitschicht aus Kunststoff aufgebracht ist, besteht.

Die Schicht aus einem Copolymerisat aus Perfluoralkylvinylether und Tetrafluorethylen weist eine Dicke auf, die für eine Nacharbeitung ausreicht. Diese kann bis zu 1,5 mm betragen. Die Schicht wird unmittelbar auf die glatte oder aufgerauhte Oberfläche des Metallträgers aufgebracht. Das Aufbringen geschieht in der Weise, daß die Copolymerisatschicht flächig auf den Metallträger aufgedrückt wird, bis die Adhäsionskräfte ausreichend stark sind, um sie auf dem Metallträger festzuhalten. Eine Besonderheit der Erfindung ist somit darin zu sehen, daß eine aus einem Copolymerisat aus Perfluoralkylvinylether und Tetrafluorethylen bestehende Schicht direkt auf einen Metallträger aufgebracht werden kann. Diese Schicht kann entweder direkt als Gleitschicht dienen oder als Zwischenschicht eingesetzt werden, auf welcher insbesondere Polytetrafluorethylen, Polyimid oder Polyetheretherketon (PEEK) gut haften. Das heißt es ist nicht erforderlich, die Copolymerisate aus Perfluoralkylvinylether und Tetrafluorethylen klebfähig zu machen oder mittels eines Klebers zu befestigen. Insbesondere die Temperaturbelastbarkeit ist daher nicht mehr von dem verwendeten Kleber abhängig.

Als Metallträger kommt vorzugsweise Stahl in Betracht. Als Material für die auf der Schicht aus einem Copolymerisat aus Perfluoralkylvinylether und Tetrafluorethylen aufgebrachte Gleitschicht sind Kunststoffe, insbesondere Polytetrafluorethylen, Polyimid oder Polyetheretherketon (PEEK) geeignet.

Der Schicht aus einem Copolymerisat aus Perfluoralkylvinylether und Tetrafluorethylen und/oder der darauf aufgebrachten Gleitschicht aus Kunststoff können zur Verstärkung und/oder zur Verbesserung der Wärmeleitfähigkeit und/oder der Verschleißeigenschaften ein oder mehrere Füllstoffe zugegeben werden. Je nach Zielsetzung werden insbesondere Kohle, Aluminiumoxid, Keramikwerkstoffe, Glas, Bronze, Molybdändisulfid oder Siliziumkarbid (Gewebe, Pulver, Kugeln, Fasern) eingelagert.

Durch Siliziumkarbidpartikel werden gute Wärmeleiteigenschaften erreicht, die nicht die Gefahr der Oxidation bei der Herstellung mit sich bringen. Die Siliziumkarbidpartikel sind außerdem säurebeständig und billig. Sie sind auch leichter als Metallpartikel, insbesondere Bronze, so daß bei der Herstellung der Schicht aus einem Copolymerisat aus Perfluoralkylvinylether und Tetrafluorethylen nicht die Gefahr des Entmischens besteht. An der Lagerseite dagegen sollten solche Füllstoffe eingelagert werden, die die Verschleißeigenschaften des Lagers verbessern. Bei der Erfindung läßt sich ein Füllstoffanteil von 1 bis 40 Vol.-% verwirklichen, weil der Füllstoff nicht wie beim bisherigen Stand der Technik eingewalzt werden braucht, sondern in der Schicht aus einem Copolymerisat aus Perfluoralkylvinylether und Tetrafluorethylen bereits vorhanden ist. Besonders bevorzugt werden 5 bis 30 Vol.-%. Die Dicke der Schicht aus einem Copolymerisat aus Perfluoralkylvinylether und Tetrafluorethylen (bis zu 1,5 mm) ist sehr genau einstellbar.

In Versuchen hat das Gleitlager bei Dauerbetrieb Temperaturen bis 260 ^{o}C, je nach verwendetem Material, standgehalten, ohne daß es zum Ablösen der Schicht aus einem Copolymerisat aus Perfluoralkylvinylether und Tetrafluorethylen gekommen ist. Kurzzeitige höhere Temperaturbelastungen überstand das Gleitlager ohne Schäden.

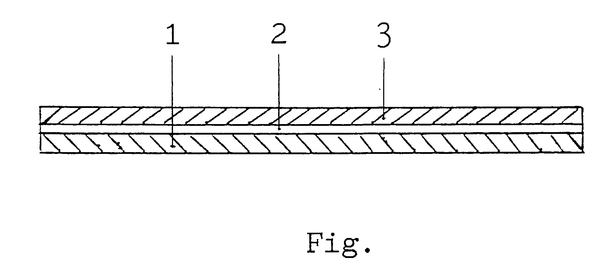

Der Aufbau des erfindungsgemäßen Gleitlagerstoffes ist in der Figur dargestellt. Hierbei ist die Metallschicht mit 1 bezeichnet, während 2 die Schicht aus einem Copolymerisat aus Perfluoralkylvinylether und Tetrafluorethylen und 3 die darauf aufgebrachte Schicht aus Kunststoff bezeichnen.

Durch die nachfolgenden Versuche wird die vorliegende Erfindung näher erläutert.

### Beispiel 1

### Versuche mit Polytetrafluorethylen und geätztem Metallträger

Eine Stahlplatte als Metallträger wurde beschichtet.

| | |
|---|---|
| Gleitschicht: | PTFE + Gewebe aus rostfreiem Stahl + Glas + Graphit |
| Stärke der Gleitschicht: | 0,48 mm |
| Temperatur der beheizten Platte: | 375 - 385 ^{o}C |
| Druck der beheizten Platte: | 0,6 bis 1,0 MPa |
| Zwischenschicht: | TFM |
| Stärke der Zwischenschicht vor Beschichtung: | 0,25 mm |
| Stärke der Zwischenschicht nach Beschichtung: | ca. 0,20 mm |

### Ergebnis des Scherkrafttests:

| | |
|---|---|
| τ = 106 N/cm² | bei Raumtemperatur |
| τ = 70 N/cm² | bei 200^{o} C |

### Beispiel 2

### Versuche mit geätztem und nicht geätztem Metallträger

| Stahlplatte als Metallträger | |
|---|---|
| Stärke des Musters vor Beschichtung: | 1,10 mm |
| Stärke des Musters nach Beschichtung: | 1,00 mm |
| Temperatur der beheizten Platte: | 290 ^{o}C |
| Druck der beheizten Platte: | 0,6 -1,0 MPa |
| Eingesetzte Zwischenschicht: | ETFE |

Gleitschicht wie in Beispiel 1

### Ergebnisse der Scherkraftteste:

| **Temperatur** | **geätzt (N/cm²)** | **nicht geätzt (N/cm²)** |
|---|---|---|
| Raumtemp. | 133 | 91 |
| 100 ^{o}C | 125 | 77 |
| 150 ^{o}C | 107 | 62 |
| 200 ^{o}C | 58 | 26 |

### Beispiel 3

| Stahlplatte als Metallträger | |
|---|---|
| Gleitschicht: | PTFE mit 35 % Kohle gefüllt als Folie |
| Dicke: | 0,5 mm |
| Zwischenschicht: | TFM mit 30 % SiC |
| Dicke: | 0,25 mm |
| Temperatur der beheizten Platte: | 390 ^{o}C |
| Druck der beheizten Platte: | 0,2 MPa |

### Ergebnis des Scherkrafttests:

Kein Ablösen der Folie, Folie zerreißt.

### Beispiel 4

| Stahlplatte als Metallträger | |
|---|---|
| Gleitschicht: | TFM + 25 % Glas + 5 % Graphit direkt auf Stahl gepreßt |
| Dicke: | 0,25 mm |
| Zwischenschicht: | keine |
| Temperatur der beheizten Platte: | 380 ^{o}C |
| Druck der beheizten Platte: | 0,2 MPa |

### Ergebnis des Scherkrafttests:

| | |
|---|---|
| Bei Raumtemperatur: | τ = 1500 N/cm² |
| Bei 100^{o} C: | τ = 1080 N/cm² |
| Bei 150^{o} C: | τ = 220 N/cm² |

### Beispiel 5

| Stahlplatte als Metallträger | |
|---|---|
| Gleitschicht: | Polyimid |
| Dicke: | 0,125 mm |
| Zwischenschicht: | TFM (wie in Beispiel 1)-Folie |
| Dicke: | 0,25 mm |
| Temperatur der beheizten Platte: | 395 ^{o}C |
| Druck der beheizten Platte: | 5,0 MPa |

### Ergebnis des Scherkrafttests:

Keine Ablösung, Folie zerreißt.

### Beispiel 6

| Prüfbedingungen: | |
|---|---|
| Probengröße: | 25 x 25 mm² |
| Abzugskraft: | 0,1 kg |
| Temperaturverlauf: | je Stufe 5 ^{o}C steigend 3 min. steigende Temperatur 3 min. Temperatur haltend |
| Gleitschicht: | PTFE + Bronzegewebe |
| Zwischenschicht: | TFM-Folie |
| Herstellung der Probe: | Gleit- und Zwischenschicht wurden auf ein Blech (0,5 mm chromatiert) mit 3 t Preßdruck aufgedrückt. |
| Ergebnis des Schertests: | bei 410 ^{o}C keine Proben abgefallen |

In den Beispielen bedeuten:
- PTFE =: Polytetrafluorethylen
- TFM =: modifiziertes Polytetrafluorethylen (= Copolymerisat aus Perfluoralkylvinylether und Tetrafluorethylen gemäß der Erfindung)
- ETFE =: Copolymerisat aus Ethylen und Tetrafluorethylen. Es handelt sich hier um ein thermoplastisches Fluorpolymer
- PFA =: Copolymerisat aus Perfluorvinylether und Tetrafluorethylen gemäß der Erfindung. Dieses Produkt ist chemisch ähnlich dem TFM. Es ist jedoch infolge seines höheren Ethergehalts thermoplastisch.

## Patentansprüche

1. Wartungsfreies Gleitlager, bestehend aus einem Metallträger und einer unmittelbar darauf aufgebrachten, aus einem Copolymerisat aus Perfluoralkylvinylether der Formel:
CF₂ = CF - 0 - R_{f},
worin R_{f} einen Perfluorethyl-, Perfluor-n-propyl- oder Perfluor-n-butyl-Rest bedeutet, und Tetrafluorethylen bestehenden Schicht, die entweder die Gleitschicht oder eine Zwischenschicht, auf welcher eine Gleitschicht aus Kunststoff aufgebracht ist, bildet.

2. Gleitlager nach Anspruch 1
**dadurch gekennzeichnet,** daß die Dicke der Gleitschicht bis zu 1,5 mm beträgt.

3. Gleitlager nach Anspruch 1,
**dadurch gekennzeichnet,** daß der Metallträger eine glatte Oberfläche hat.

4. Gleitlager nach Anspruch 1,
**dadurch gekennzeichnet,** daß der Metallträger eine aufgerauhte Oberfläche hat.

5. Gleitlager nach Anspruch 1, **dadurch gekennzeichnet,** daß der Metallträger aus Stahl besteht.

6. Gleitlager nach Anspruch 1,
**dadurch gekennzeichnet,** daß die auf der Schicht aus einem Copolymerisat aus Perfluoralkylvinylether und Tetrafluorethylen aufgebrachte Gleitschicht eine Kunststofffolie ist, die gelocht und/oder luftdurchlässig ist.

7. Gleitlager nach Anspruch 1,
**dadurch gekennzeichnet,** daß die auf der Schicht aus einem Copolymerisat aus Perfluoralkylvinylether und Tetrafluorethylen aufgebrachte Gleitschicht aus Polytetrafluorethylen oder Polyimid oder Polyetherketon (PEEK) besteht.

8. Gleitlager nach Anspruch 1,
**dadurch gekennzeichnet,** daß der auf der Schicht aus einem Copolymerisat aus Perfluoralkylvinylether und Tetrafluorethylen aufgebrachten Gleitschicht aus Kunststoff zur Verstärkung und/oder Verbesserung der Wärmeleitfähigkeit und/oder der Verschleißeigenschaften ein oder mehrere Füllstoff(e) zugegeben wird (werden).

9. Gleitlager nach Anspruch 8,
**dadurch gekennzeichnet,** daß die Füllstoffe Gewebe, Pulver oder Fasern aus Kohle, Aluminiumoxid, Keramikwerkstoffen, Glas, Bronze, Molybdändisulfid oder Siliziumkarbid sind.

10. Gleitlager nach Anspruch 8,
**dadurch gekennzeichnet,** daß der Füllstoffanteil 1 bis 40 Vol.-% beträgt.

11. Gleitlager nach Anspruch 9,
**dadurch gekennzeichnet,** daß der Füllstoffanteil 5 bis 30 Vol.-% beträgt.

12. Gleitlager nach Anspruch 1,
**dadurch gekennzeichnet,** daß die aus einem Copolymerisat aus Tetrafluorethylen und Perfluoralkylvinylether bestehende Zwischenschicht als Füllstoffe Gewebe, Pulver oder Fasern aus Kohle, Aluminiumoxid, Keramikwerkstoffen, Glas, Bronze, Molybdändisulfid oder Siliziumkarbid enthält.

13. Verfahren zur Herstellung des wartungsfreien Gleitlagers gemäß Anspruch 1,
**dadurch gekennzeichnet,** daß die Folie flächig, unter Druck und Wärmezufuhr mit dem Träger verbunden wird.

14. Verfahren nach Anspruch 13,
**dadurch gekennzeichnet,** daß die Oberfläche des Metallträgers vor dem Aufbringen der Gleitschicht aufgerauht wird.

## Claims

1. A maintenance-free sliding bearing comprising a metal support and a layer which is directly applied thereto and which consists of a copolymer of perfluoroalkyl vinyl ether having the Formula:
CF₂ = CF - O - R_{f},
where R_{f} denotes a perfluoroethyl, perfluoro-n-propyl or perfluoro-n-butyl radical, and tetrafluoroethylene, said layer forming either the sliding layer or an intermediate layer to which a sliding layer of plastics is applied.

2. A sliding bearing according to claim 1, characterized in that the thickness of the sliding layer is up to 1.5 mm.

3. A sliding bearing according to claims 1 or 2, characterized in that the metal support has a smooth surface.

4. A sliding bearing according to claims 1 or 2, characterized in that the metal support has a roughened surface.

5. A sliding bearing according to one of claims 1 to 4, characterized in that the metal support is made of steel.

6. A sliding bearing according to one of claims 1 to 4, characterized in that the sliding layer applied to the layer of a copolymer of perfluoroalkyl vinyl ether and tetrafluoroethylene is a plastics sheet which is perforate and/or air-permeable.

7. A sliding bearing according to one of claims 1 to 6, characterized in that the sliding layer applied to the layer of a copolymer of perfluoroalkyl vinyl ether and tetrafluoroethylene consists of polytetrafluoroethylene or polyimide or polyether ketone (PEEK).

8. A sliding bearing according to one of claims 1 to 7, characterized in that one or more fillers is or are added to the plastics sliding layer applied to the layer of a copolymer of perfluoroalkyl vinyl ether and tetrafluoroethylene, for reinforcement and/or the improvement of thermal conductivity and/or wearing properties.

9. A sliding bearing according to claim 8, characterized in that the fillers are fabrics, powders or fibres of carbon, aluminium oxide, ceramic materials, glass, bronze, molybdenum sulphite or silicon carbide.

10. A sliding bearing according to claims 8 or 9, characterized in that the proportion of filler is 1 to 40% by volume.

11. A sliding bearing according to claim 9, characterized in that the proportion of filler is 5 to 30% by volume.

12. A sliding bearing according to claims 1 to 11, characterized in that the intermediate layer, consisting of a copolymer of tetrafluoroethylene and perfluoroalkyl vinyl ether, contains as fillers fabrics, powders or fibres of carbon, aluminium oxide, ceramic materials, glass, bronze, molybdenum sulphide or silicon carbide.

13. A process for the production of the maintenance-free sliding bearing as set forth in one of claims 1 to 11, characterized in that the sheet is connected over its surface area to the support, under pressure and with the supply of heat.

14. A process according to claim 13, characterized in that the surface of the metal support is roughened before the application of the sliding layer.

## Revendications

1. Palier lisse constitué d'un support métallique et d'une couche disposée directement dessus et constituée d'un copolymère de perfluoralkylvinyléther de formule :
CF₂ = CF - O - R_{f},
où R_{f} signifie un reste perfluoréthyle, perfluor-n-propyle ou perfluor-n-butyle, et de tétrafluoréthylène, qui constitue soit la couche de glissement soit une couche intermédiaire sur laquelle est déposée une couche de glissement en matière synthétique.

2. Palier lisse selon la revendication 1,
caractérisé en ce que l'épaisseur de la couche de glissement va jusqu'à 1,5 mm.

3. Palier lisse selon la revendication 1,
caractérisé en ce que le support métallique a une surface lisse.

4. Palier lisse selon la revendication 1,
caractérisé en ce que le support métallique a une surface rendue rugueuse.

5. Palier lisse selon la revendication 1,
caractérisé en ce que le support métallique est constitué d'acier.

6. Palier lisse selon la revendication 1,
caractérisé en ce que la couche de glissement déposée sur la couche en un copolymère de perfluoralkylvinyléther et de tétrafluoréthylène est une feuille de matière synthétique qui est perforée et/ou perméable à l'air.

7. Palier lisse selon la revendication 1,
caractérisé en ce que la couche de glissement déposée sur la couche en un copolymère de perfluoralkylvinyléther et de tétrafluoréthylène est constituée de polytétrafluorétylène ou de polyimide ou de polyéthercétone (PEEC).

8. Palier lisse selon la revendication 1,
caractérisé en ce qu'une ou plusieurs charges sont ajoutées à la couche de glissement déposée sur la couche en un copolymère de perfluoralkylvinyléther et de tétrafluoréthylène pour le remplacement et/ou l'amélioration de la conductibilité thermique et/ou des caractéristiques d'usure.

9. Palier lisse selon la revendication 8,
caractérisé en ce que les charges sont des tissus, des poudres ou des fibres en carbone, en oxyde d'aluminium, en matériaux céramiques, en verre, en bronze, en sulfure de molybdène ou en carbure de silicium.

10. Palier lisse selon la revendication 8,
caractérisé en ce que la teneur en charge est de 1 à 40 % en volume.

11. Palier lisse selon la revendication 9,
caractérisé en ce que la teneur en charge est de 5 à 30 % en volume.

12. Palier lisse selon la revendication 1,
caractérisé en ce que la couche intermédiaire constituée d'un copolymère de tétrafluoréthylène et de perfluoralkylvinyléther contient comme charges des tissus, des poudres ou des fibres en carbone, en oxyde d'aluminium, en matériaux céramiques, en verre, en bronze, en sulfure de molybdène ou en carbure de silicium.

13. Procédé pour la fabrication du papier lisse selon la revendication 1,
caractérisé en ce que la feuille est reliée en nappes, sous pression et apport de chaleur, au support.

14. Procédé selon la revendication 13,
caractérisé en ce que la surface du support métallique est rendue rugueuse avant le dépôt de la couche de glissement.
